# FASCICULE DE BREVET EUROPEEN

(11) **EP 1 914 854 B1**
(45) Date de publication et mention de la délivrance du brevet: **03.10.2012**
(21) Numéro de dépôt: 07291257.9
(22) Date de dépôt: 15.10.2007
(51) Int. Cl.: H02G 1/12, H01R 43/28

(54) **Outil pour la découpe, l'entaille ou le dénudage au moins partiel d'un corps allongé**
Werkzeug zum zumindest teilweisen Abschneiden, Einschneiden oder Abmanteln eines Längskörpers
Tool for at least partial cutting, indenting or stripping of an elongated body

(30) Priorité: 16.10.2006 FR 0609017
(43) Date de publication de la demande: 23.04.2008
(73) Titulaire: Roux, Didier, 72190 Neuville Sur Sarthe (FR)
(72) Inventeur: Roux, Didier, 72190 Neuville Sur Sarthe (FR)
(74) Mandataire: Laget, Jean-Loup

(56) Documents cités:
- FR-A1- 2 875 064
- GB-A- 1 130 337
- US-A- 3 744 230
- US-A- 4 104 791
- US-A- 4 829 671
- US-A- 5 063 795
- US-A- 5 398 413
- US-A- 5 669 275
- US-A- 6 128 976

## Description

La présente invention concerne un outil pour la découpe entaille ou le dénudage au moins partiel d'un corps allongé, tel qu'un câble multicouches concentriques, en particulier un câble électrique gainé, présentant en surface au moins une couche à découper, entailler ou dénuder.

Elle concerne plus particulièrement un outil de type précité comportant au moins d'une part deux mâchoires délimitant un logement de passage du corps allongé et d'autre part au moins un organe de coupe, ledit outil et le corps allongé à découper, entailler ou dénuder étant animés au moins d'un mouvement relatif de rotation.

Les outils de ce type sont bien connus à ceux versés dans cet art et un exemple d'un tel outil est notamment fourni dans le brevet FR-A-2.875.064.

Le problème d'un tel outil est de s'user extrêmement rapidement, en particulier au niveau des surfaces de l'outil en contact avec le corps allongé à traiter. Ce problème d'usure rapide résulte du mouvement relatif de rotation entre outil et corps allongé à traiter. Les utilisateurs de tels outils sont donc actuellement obligés de changer d'outil de manière régulière. En effet, à force de frotter et de tourillonner sur les différentes couches du corps allongé, les faces de l'outil soumises aux frottements s'usent et se creusent malgré des traitements thermiques ou des revêtements de surface.

Pour résoudre le problème de cette usure prématurée, il a été imaginé de rapporter sur lesdites mâchoires des garnitures amovibles comme l'illustrent en particulier les brevets US-4.104.791, US-3.744.230, GB-1.130.337, US-5.398.413, US-4.829.671 et US-5.669.275.

Toutefois, jusqu'à présent, soit ce montage n'est pas sûr de sorte qu'il en résulte une possibilité de séparation par glissement de la garniture de la mâchoire lors des opérations de coupe, soit ce montage est complexe car il nécessite de fixer généralement par vissage la garniture à la mâchoire, ce qui prend du temps à l'opérateur et oblige ce dernier, à chaque changement de garniture, à disposer d'un outil, tel qu'un tournevis, pour procéder au démontage puis au remontage de ladite garniture.

Un but de la présente invention selon la revendication 1 est donc de proposer un outil du type précité dont la conception permet d'augmenter sa durée de vie.

Un autre but de la présente invention est de proposer un outil dont la maintenance est facilitée.

A cet effet, l'invention telle que définie dans la revendication 1 a pour objet un outil pour la découpe, l'entaille ou le dénudage au moins partiel d'un corps allongé, tel qu'un câble multicouches concentriques, en particulier un câble électrique gainé, présentant en surface au moins une couche à découper, entailler ou dénuder, ledit outil et le corps allongé à découper, entailler ou dénuder étant animés au moins d'un mouvement relatif de rotation, ledit outil comportant au moins deux mâchoires délimitant un logement de passage du corps allongé et au moins un organe de coupe, les surfaces des mâchoires servant à la délimitation du logement sont équipées de garnitures amovibles.

Grâce au fait que les garnitures de l'invention, telles que définies dans la revendication 5 sont montées de manière amovible sur les surfaces des mâchoires, la maintenance d'un tel outil est facilitée.

Selon l'invention, les garnitures amovibles sont montées à coulissement à emboîtement avec des formes de réception complémentaires ménagées sur lesdites surfaces des mâchoires.

Ce montage facilite la mise en place et l'enlèvement des garnitures sans nuire à la sûreté de l'assemblage. En effet, un tel montage permet de garantir le maintien en position des garnitures à la surfaces desdites mâchoires.

L'invention a encore pour objet une pièce d'usure pour un outil du type précité, cet outil comportant au moins deux mâchoires délimitant un logement de passage du corps allongé et au moins un organe de coupe, caractérisée en ce qu'elle se présente sous forme d'une garniture de type plaque couplable de manière amovible à la surface d'une mâchoire de l'outil.

L'invention sera bien comprise à la lecture de la description suivante d'exemples de réalisation, en référence aux dessins annexés dans lesquels :
la figure 1 représente une vue de face d'un outil conforme à l'invention ;
la figure 2 représente une vue en perspective de l'outil de la figure 1 ;

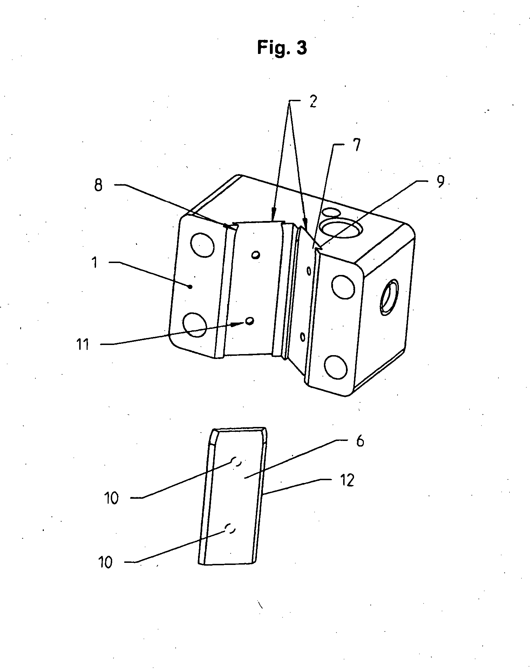

la figure 3 représente une vue en perspective d'une mâchoire à l'état démonté de la garniture.

Comme mentionné ci-dessus, les outils pour la découpe, l'entaille ou le dénudage au moins partiel d'un corps allongé, tel qu'un câble multicouches concentriques, en particulier un câble électrique gainé, sont bien connus à ceux versés dans cet art. De telles opérations de dénudage sont nécessaires notamment pour la réalisation de connexion électrique ou épissure pour lesquelles il convient d'enlever au moins une partie d'une couche extérieure de câble, notamment la couche de revêtement ou d'isolation du câble électrique. Bien que l'invention soit ainsi décrite dans le cas d'une application au dénudage de câble, elle peut s'appliquer de manière équivalente à la découpe, généralement sous forme d'une bande hélicoïdale de tout type de corps de forme générale cylindrique, tel que tube ou autre.

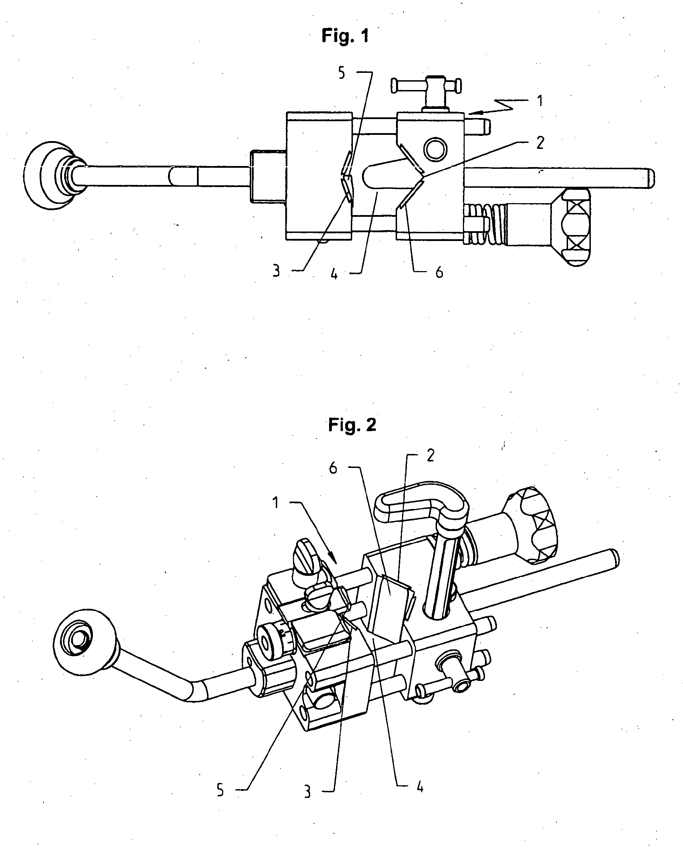

Ces outils de dénudage ou de découpe connus à ce jour se présentent généralement sous forme d'un bloc d'allure générale parallélépipédique formé de deux parties reliées entre elles par des tiges de guidage de manière à permettre un rapprochement ou un écartement des parties de bloc entre elles par coulissement des parties de bloc le long desdites tiges. Les faces en regard des parties de bloc constituent des mâchoires 2, 3 délimitant un logement 4 de passage du corps allongé à découper, dénuder ou entailler. Ces faces en regard des parties de bloc sont généralement conformées sous forme de mâchoires en V comme l'illustre la figure 1. Des poignées sont également montées sous forme de tiges radiales sur ces parties de bloc pour permettre dans le cas d'un actionnement manuel de l'appareil un entraînement en rotation du corps de l'appareil autour du câble par action sur lesdites poignées. Au moins l'une des parties de bloc est en outre équipée d'un organe 5 de coupe. Cet organe 5 de coupe s'étend généralement radialement audit corps et fait saillie dans le logement 4 de passage du corps allongé. Cet organe 5 de coupe peut comporter un premier tranchant orienté sur une droite qui coupe perpendiculairement à l'axe du passage d'introduction de câble délimité par ledit logement 4 et d'un deuxième tranchant orienté sensiblement parallèlement à l'axe dudit passage. Certains organes 5 de coupe ne comportent qu'un seul tranchant. L'un des tranchants de coupe peut être conformé pour découper, au fur et à mesure du déplacement axial de l'outil le long du corps allongé obtenu par entraînement en rotation du corps allongé, une bande de matière sous forme d'un enroulement spiralé. En effet, généralement, l'outil 1 et le corps allongé sont animés au moins d'un mouvement relatif de rotation et de translation. De manière caractéristique à l'invention, les surfaces des mâchoires 2, 3, servant à la délimitation du logement 4 de passage du corps allongé et soumises à un frottement lors du mouvement relatif de rotation et éventuellement de translation entre outil et corps allongé, sont équipées de garnitures 6 de friction amovibles.

Les possibilités de démontage des garnitures des surfaces 7 des mâchoires peuvent être remplies de différentes manières. Ainsi, dans les exemples représentés, les garnitures 6 amovibles sont montées à coulissement à emboîtement avec des formes 7 de réception complémentaires ménagées sur lesdites surfaces des mâchoires 2, 3. Dans le cas dans lequel l'outil 1 et le corps allongé sont animés d'un mouvement relatif de rotation et de translation au cours des opérations de découpe, d'entaille ou de dénudage, les garnitures 6 sont montées sur les surfaces de mâchoires 2, 3 à coulissement suivant une direction opposée à la direction d'avancement de l'outil sur le corps allongé depuis une position d'introduction jusqu'à une position d'immobilisation. Le déplacement relatif axial tend à entraîner constamment la garniture 6 en direction de sa position d'immobilisation. Il en résulte une augmentation de la sûreté du montage et de la liaison entre outil et corps allongé. Cette position d'immobilisation peut être déterminée de différentes manières. Par exemple, les parties 12 de garniture 6 en contact d'appui glissant avec les formes 7 de réception complémentaires des mâchoires 2, 3, et/ou les formes 7 de réception complémentaires desdites mâchoires 2, 3, présentent au moins une zone 8 de convergence correspondant à la position d'immobilisation de ladite garniture 6. Dans les figures, les garnitures 6 affectent, dans l'exemple représenté, la forme de plaques montées à coulissement dans des logements de forme complémentaire ménagés sur les surfaces desdites mâchoires 2, 3. Les parois 9 longitudinales des logements des surfaces des mâchoires 2, 3 sont chanfreinés en forme de queue d'aronde pour s'ajuster aux bords 12 longitudinaux correspondants desdites plaques de garniture anti-friction. Ainsi, chaque mâchoire 2, 3 en forme de V présente, sur chacune des faces intérieures du dièdre constitutif du V, une rainure ou logement en forme de queue d'aronde ou en forme de T destiné à constituer la forme femelle de l'assemblage à emboîtement. La plaque de garniture de forme complémentaire ajustée constitue quant à elle l'élément mâle dudit emboîtement. Elle vient ainsi se loger à l'intérieur de ladite rainure ou du logement dont les bords 9 longitudinaux sont agencés pour maintenir à emboîtement ladite plaque.

Comme les parois 9 longitudinales de chaque logement convergent, à une de leur extrémité, en direction de l'intérieur dudit logement, la plaque introduite à coulissement à l'intérieur dudit logement est, une fois positionnée dans la zone 8 de convergence, immobilisée. La poursuite d'un effort axial sur ladite plaque empêche tout déplacement axial de cette dernière à l'intérieur du logement. La plaque d'usure vient ainsi en butée dans le sens opposé au déplacement axial de l'outil par rapport au corps allongé pour contraindre la plaque à rester en butée au fur et à mesure du déplacement de l'outil de sorte que, lorsque l'outil dénude, entaille ou découpe le corps allongé, la plaque de garniture anti-friction ne peut pas glisser et sortir de l'outil. Pour parfaire cette immobilisation, les garnitures 6 sont munies, sur leur face en contact avec les surfaces des mâchoires 2, 3, d'au moins un plot 10 apte à s'insérer dans un perçage 11 correspondant desdites surfaces de mâchoire 2, 3. Cette coopération entre plot et perçage permet d'obtenir une sûreté supplémentaire afin d'éviter que la plaque de garniture ne sorte de l'outil.

Bien évidemment, d'autres formes d'emboîtement entre le bord de la garniture 6 de friction et la paroi 9 longitudinale du logement de la machine peuvent être envisagés. Ainsi, le bord longitudinal de la plaque de la garniture peut être rainuré.

La garniture de friction ainsi réalisée constitue une pièce d'usure qui se présente sous forme d'une plaque couplée de manière amovible à la surface d'une mâchoire. Les bords 12 longitudinaux de la plaque de garniture sont chanfreinés et la face de la plaque destinée à venir en contact avec la surface d'une mâchoire 2, 3 est munie d'au moins un plot 10.

Dans les exemples représentés, chaque surface de mâchoire coopérant avec une plaque est équipée de deux perçages 11 et chaque plaque de garniture comporte deux plots 10. Chaque mâchoire est équipée de deux garnitures venant s'appliquer chacune à recouvrement de la face interne d'un plan du dièdre constitutif de la mâchoire en V. La mise en place et l'enlèvement d'une telle plaque de garniture s'opèrent de manière extrêmement aisée. En effet, il suffit de positionner la garniture en regard des parois 9 longitudinales d'un logement d'une surface de mâchoire puis de déplacer axialement ladite plaque parallèlement aux parois 9 longitudinales du logement pour introduire ladite plaque à l'intérieur de la forme en queue d'aronde dudit logement jusqu'à atteindre la zone 8 de convergence desdites parois où la plaque est immobilisée. Quand une telle plaque de garniture est usée, il suffit de déplacer axialement ladite plaque en direction opposée pour permettre l'enlèvement de la plaque de la mâchoire et procéder à la mise en place d'une nouvelle plaque de garniture. Il en résulte une maintenance extrêmement aisée de l'ensemble sans nécessiter d'élément de liaison, tel que colle, qui obligerait à un nettoyage de la surface de mâchoire avant mise en place d'une nouvelle plaque. Généralement, les plaques de garniture sont réalisées en matière de synthèse.

## Revendications

1. Outil (1) pour la découpe, l'entaille ou le dénudage au moins partiel d'un corps allongé, tel qu'un câble multicouches concentriques, en particulier un câble électrique gainé, présentant en surface au moins une couche à découper, entailler ou dénuder, ledit outil (1) et le corps allongé à découper, entailler ou dénuder étant animés d'un mouvement relatif de rotation et de translation, ledit outil (1) comportant au moins deux mâchoires (2, 3) délimitant un logement (4) de passage du corps allongé et au moins un organe (5) de coupe, les surfaces des mâchoires (2, 3) servant à la délimitation du logement (4) étant équipées de garnitures (6) amovibles montées à coulissement à emboîtement avec des formes (7) de réception complémentaires ménagées sur lesdites surfaces des mâchoires (2, 3),
**caractérisé en ce que** les garnitures (6) sont montées sur les surfaces de mâchoires (2, 3) à coulissement suivant une direction opposée à la direction d'avancement de l'outil sur le corps allongé depuis une position d'introduction jusqu'à une position d'immobilisation, les parties (12) de garniture (6) en contact d'appui glissant avec les formes (7) de réception complémentaires des mâchoires (2, 3) et/ou les formes (7) de réception complémentaires desdites mâchoires (2, 3) présentant au moins une zone (8) de convergence correspondant à la position d'immobilisation de ladite garniture (6).

2. Outil (1) pour la découpe, l'entaille ou le dénudage selon la revendication 1, **caractérisé en ce que** les garnitures (6) affectent la forme de plaques montées à coulissement dans des logements de forme complémentaire ménagés sur les surfaces desdites mâchoires (2, 3).

3. Outil (1) pour la découpe, l'entaille ou le dénudage selon la revendication 2, **caractérisé en ce que** les parois (9) longitudinales des logements des surfaces des mâchoires (2, 3) sont chanfreinées en forme de queue d'aronde pour s'ajuster aux bords (12) longitudinaux correspondant desdites plaques de garniture.

4. Outil (1) pour la découpe, l'entaille ou le dénudage selon l'une des revendications 1 à 3, **caractérisé en ce que** les garnitures (6) sont munies, sur leur face en contact avec les surfaces des mâchoires (2, 3), d'au moins un plot (10) apte à s'insérer dans un perçage (11) correspondant desdites surfaces de mâchoire (2, 3).

5. Pièce d'usure pour outil (1) conforme à l'une des revendications 1 à 4, ledit outil (1) comportant au moins deux mâchoires (2, 3) délimitant un logement (4) de passage du corps allongé et au moins un organe (5) de coupe, ladite pièce d'usure présentant sous forme d'une garniture (6) de type plaque couplable de manière amovible à la surface d'une mâchoire (2, 3) de l'outil (1),
**caractérisée en ce que** les bords (12) longitudinaux de la plaque de garniture sont chanfreinés et **en ce que** la face de la plaque destinée à venir en contact avec la surface d'une mâchoire (2, 3) est munie d'au moins un plot (10).

## Claims

1. A tool (1) for at least partly cutting out, notching or stripping an elongated body, such as a concentric multilayer cable, in particular a cladded electric cable, having, at the surface at least one layer to be cut out, cut or stripped, said tool (1) and the elongated body to be cut out, cut or stripped performing a relative movement of rotation and of translation, said tool (1) including at least two jaws (2, 3), delimiting a housing (4) for letting through the elongated body, and at least one cutting member (5), the surfaces of the jaws (2, 3), used for delimiting the housing (4) being equipped with removable liners (6) slideably mounted so as to fit in with mating receiving shapes (7) laid out on said surfaces of the jaws (2, 3),
**characterized in that** the liners (6) are mounted on the surfaces of jaws (2, 3) with sliding along a direction opposite to the advance direction of the tool on the elongated body from an introduction position to an immobilization position, the liner (6) portions (12) in pressing contact sliding with the mating receiving shapes (7) of the jaws (2, 3) and/or the mating receiving shapes (7) of said jaws (2, 3), having at least one convergence area (8), corresponding to the immobilization position of said liner (6).

2. The cutting-out, notching or stripping tool (1) according to claim 1, **characterized in that** the liners (6) assume the shape of plates slideably mounted in the housings of a mating shape made on the surfaces of said jaws (2, 3).

3. The cutting-out, notching or stripping tool (1) according to claim 2, **characterized in that** the longitudinal walls (9) of the housings of the surfaces of the jaws (2, 3) are chamfered as a dovetail in order to be adjusted to the longitudinal edges (12) corresponding to said liner plates.

4. The cutting-out, notching or stripping tool (1) according to one of claims 1 to 3, **characterized in that** the liners (6) are provided on their face in contact with the surfaces of the jaws (2, 3) with at least one stud (10) capable of being inserted into a matching drilled hole (11) of said jaw surfaces (2, 3).

5. A wearing part for a tool (1) according to one of claims 1 to 4, said tool (1) including at least two jaws (2, 3), delimiting a housing (4) for letting through the elongated body, and at least one cutting member (5), said the wearing part, appearing as a liner (6) of the plate type, which may be removably coupled to the surface of a jaw (2, 3) of the tool (1),
**characterized in that** the longitudinal edges (12) of the liner plates are chamfered and **in that** the face of the plate intended to come into contact with the surface of a jaw (2, 3) is provided with at least one stud (10).

## Patentansprüche

1. Werkzeug (1) zum mindestens teilweisen Schneiden, Kerben oder Abmanteln eines länglichen Körpers, wie ein konzentrisches vielschichtiges Kabel, insbesondere ein ummanteltes elektrisches Kabel, der auf der Oberfläche mindestens eine zu schneidende, zu kerbende oder abzumantelnde Schicht aufweist, wobei das Werkzeug (1) und der zu schneidende, zu kerbende oder abzumantelnde längliche Körper mit einer relativ drehenden und verlagernden Bewegung angetrieben werden, wobei das Werkzeug (1) mindestens zwei Backen (2, 3) aufweist, die eine Durchgangsaufnahme (4) des länglichen Körpers begrenzen und mindestens ein Schneideorgan (5), wobei die Oberflächen der Backen (2, 3), die zur Begrenzung der Aufnahme (4) dienen, mit entfernbaren Beschlägen (6) ausgestattet sind, die mit komplementären Aufnahmeformen (7) rastend gleiten, die auf den Oberflächen der Backen (2, 3) eingearbeitet sind, montiert sind,
**dadurch gekennzeichnet, dass** die Beläge (6) auf den Oberflächen der Backen (2, 3) gemäß einer Richtung gleitend montiert sind, die der Vorschubrichtung des Werkzeugs auf dem länglichen Körper von einer Einführposition bis zu einer Stillstandposition entgegengesetzt ist, wobei die Abschnitte (12) des Belags (6), die sich im gleitenden Abstützkontakt mit den komplementären Aufnahmeformen (7) der Backen (2, 3) befinden und/oder die komplementären Aufnahmeformen (7) der Backen (2, 3) mindestens eine Konvergenzzone (8) aufweisen, die der Stillstandposition des Belags (6) entsprechen.

2. Werkzeug (1) zum Schneiden, Kerben oder Abmanteln nach Anspruch 1, **dadurch gekennzeichnet, dass** die Beläge (6) wie Platten aussehen, die in komplementär geformten Aufnahmen gleitend montiert sind, die auf den Oberflächen der Backen (2, 3) eingearbeitet sind.

3. Werkzeug (1) zum Schneiden, Kerben oder Abmanteln nach Anspruch 2, **dadurch gekennzeichnet, dass** die Längswände (9) der Aufnahmen der Oberflächen der Backen (2, 3) schwalbenschwanzförmig abgeschrägt sind, um sich an die entsprechenden Längsränder (12) der Belagplatten anzupassen.

4. Werkzeug (1) zum Schneiden, Kerben oder Abmanteln nach einem der Ansprüche 1 bis 3, **dadurch gekennzeichnet, dass** die Beläge (6) auf ihrer Kontaktfläche mit den Oberflächen der Backen (2, 3) mit mindestens einem Zapfen (10) ausgestattet sind, der imstande ist, in eine entsprechende Bohrung (11) der Oberflächen einer Backe (2, 3) einzugreifen.

5. Verschleißteil für ein Werkzeug (1) gemäß einem der Ansprüche 1 bis 4, wobei das Werkzeug (1) mindestens zwei Backen (2, 3) aufweist, die eine Durchgangsaufnahme (4) des länglichen Körpers begrenzen und mindestens ein Schneidorgan (5), wobei das Verschleißteil die Form eines Belags (6) vom Typ einer auf der Oberfläche einer Backe (2, 3) des Werkzeugs (1) entfernbar verbindbarer Platte aufweist,
**dadurch gekennzeichnet, dass** die Längsränder (12) der Belagplatte abgeschrägt sind, und dass die Seite der Platte, die dazu bestimmt ist, mit der Oberfläche einer Backe (2, 3) in Kontakt zu kommen, mit mindestens einem Zapfen (10) ausgestattet ist.
